# EUROPÄISCHE PATENTSCHRIFT

(11) **EP 1 915 077 B1**
(45) Veröffentlichungstag und Bekanntmachung des Hinweises auf die Patenterteilung: **12.08.2009**
(21) Anmeldenummer: 06777482.8
(22) Anmeldetag: 27.06.2006
(51) Int. Cl.: A47J 45/07

(54) **GRIFFBEFESTIGUNG**
HANDLE FIXTURE
SYSTEME DE FIXATION DE POIGNEE

(30) Priorität: 01.08.2005 DE 102005036598
(43) Veröffentlichungstag der Anmeldung: 30.04.2008
(73) Patentinhaber: BSH Bosch und Siemens Hausgeräte GmbH, 81739 München (DE)
(72) Erfinder: STIEF, Peter, 83329 Waging Am See (DE); JÄGER, Harald, 83349 Palling (DE); KIPPER, Stephan, 33607 Bielefeld (DE)
(86) Internationale Anmeldenummer: PCT/EP2006/063588
(87) Internationale Veröffentlichungsnummer: WO 2007/014805

(56) Entgegenhaltungen:
- DE-A1- 19 623 617
- US-A- 4 746 028

## Beschreibung

Die vorliegende Erfindung betrifft ein Haushaltsbehältnis, insbesondere für Heißgetränkezubereitungsvorrichtungen, umfassend einen hohlzylinderförmigen Mantelkörper mit einer Mantelfläche, in der eine fensterförmige Aussparung angeordnet ist, ein Griffteil mit wenigstens einem Flansch und einen topfförmigen Innenbehälter, dessen Außenkontur im Wesentlichen der Innenkontur des Mantelkörpers entspricht. Die Erfindung betrifft außerdem ein Montageverfahren für ein Haushaltsbehältnis. Ein derartiges Behältnis kann zum Beispiel eine Warmhaltekanne oder ein abnehmbarer Wassertank einer Kaffeemaschine sein.

Griffbefestigungen, bei denen der Griff am Behältnis mit zusätzlichen Befestigungsmitteln, wie beispielsweise Schrauben, angebracht ist, sind allgemein bekannt. Aus der DE 196 23 617 A1 ist eine Griffbefestigung bekannt, bei der ein Griff ohne zusätzliche Befestigungsmittel vertikal in ein geschlitztes Behältnis eingeschoben wird. Nachteilig dabei ist, dass der Behälter im Bereich des Schlitzes eine verminderte Stabilität aufweist. Aus der US 4,746,028 ist eine Thermomanschette für ein Trinkgefäß bekannt. Durch den Mantelkörper der Manschette greift der Griff eines Griffteils durch, wobei das Griffteil über einen Flansch an Gefäß und Manschette formschlüssig anliegt.

Es ist daher Aufgabe der vorliegenden Erfindung, eine alternative Befestigungsmöglichkeit eines Griffes an einem Behältnis anzugeben, bei der eine schnelle und einfache Montage sowie Demontage des Griffes möglich ist, gleichzeitig aber auch eine sicher Fixierung des Griffs gegeben ist.

Diese Aufgabe wird gelöst durch die Merkmale des Patentanspruchs 1. Vorteilhafte Ausgestaltungen und Weiterbildungen der Erfindung sind in den Unteransprüchen beschrieben.

Erfindungsgemäß weist bei dem eingangs genannten Behältnis das Griffteil eine der Aussparung im Wesentlichen entsprechende Kontur auf, die von einem das Griffteil rahmenartig umgebenden Schildteil gebildet ist, das bündig in die Aussparung einsetzbar ist. Zudem ist das Griffteil in seiner Endlage unter Anlage seines Flanschs an der Innenseite des Mantelkörpers formschlüssig in dessen Aussparung eingesetzt und vorzugsweise allein durch den Innenbehälter gegen eine Lageänderung in radialer Richtung gesichert. Die Anlage des Flansches an der Innenfläche des Mantelkörpers stellt sicher, dass der Griff in seiner Endlage in einer radialen Richtung bezüglich des Mantelbehälters nicht nach außen bewegt werden kann. In der Gegenrichtung kann das Griffteil zum Beispiel durch Verkleben befestigt sein. Vorteilhaft ist das Griffteil in dieser Richtung allein durch den Innenbehälter gesichert. Dadurch erübrigt sich eine Befestigung des Griffteils durch Kleben oder dergleichen. Die formschlüssige Anlage des Griffteils in der Aussparung legt dessen Lage in Umfangs- und in Längsrichtung des Mantelkörpers fest.

Im Gegensatz zum Stand der Technik befindet sich also im Mantelkörper des Behältnisses kein dessen Stabilität mindernder Schlitz oder Einschnitt, sondern eine Aussparung. Diese kann im Wesentlichen auf die Größe des Griffteils reduziert werden. Zum einen bleibt damit die Stabilität des Mantelkörpers insbesondere bei radialer Belastung weitgehend unbeeinträchtigt. Zum anderen bietet die erfindungsgemäße Lösung eine große Gestaltungsfreiheit, weil der Aussparung kaum konstruktive oder geometrische Grenzen gesetzt sind. Die geringe Anzahl zu montierender Einzelteile ermöglicht außerdem eine einfache und schnelle Montage und Demontage.

Die Form des Mantelkörpers ist grundsätzlich frei wählbar. Die äußere Zylinderform ist dabei nicht auf einen Kreiszylinder beschränkt. Die obere und untere Deckfläche des hohlzylinderförmigen Mantelkörpers können beispielsweise eine polygonale oder ovale Außenform aufweisen. Ferner können die Deckflächen parallel oder winklig zueinander angeordnet sein. Aus Gründen der Stabilität ist jedoch eine Kreiszylinder- bzw. Rohrform des Mantelkörpers mit parallelen kreisringförmigen Deckflächen bevorzugt. Eine Rohrform lässt sich einfach und preisgünstig herstellen. Bei Verwendung geeigneter Materialien, wie beispielsweise Aluminium, kann die Aussparung leicht eingebracht werden. Der Mantelkörper besteht vorzugsweise aus Metall, weil das Behältnis damit besonders stabil ist. Mit einer entsprechenden Oberflächenveredelung lassen sich bei einem Mantelkörper aus Metall außerdem vorteilhafte optische Effekte erzielen.

Die fensterförmige Aussparung des Mantelkörpers liegt vollständig innerhalb der Mantelfläche und hat keine Verbindung zu einer der die beiden Deckflächen begrenzenden Außenkanten. Die Lage der Aussparung innerhalb der Mantelfläche sowie deren Form unterliegen grundsätzlich keinen Beschränkungen. Sie ist jedoch bevorzugt an die Form des Griffteils angepasst. Einfach herstellbar ist beispielsweise eine rechteckige Form der Aussparung. Die Ecken können dabei aus designtechnischen Gründen durch Radien ersetzt werden.

Das Griffteil ist ebenfalls grundsätzlich frei gestaltbar, solange dessen Funktion gewährleistet ist. Lediglich ergonomische Gesichtspunkte können bei der Gestaltung des Griffteils einschränkend wirken. Als Material kann zum Beispiel Kunststoff eingesetzt werden. Kunststoff ist leicht und lässt sich einfach und kostengünstig ver- und bearbeiten. Auch komplexe Formen des Griffteils lassen sich damit realisieren.

Damit das Griffteil bei seiner Montage nicht durch die Aussparung hindurch nach außen herausfallen kann, weist es wenigstens einen Flansch auf, dessen Außenkontur größer ist als die der Aussparung. Wenn das Griffteil vollständig in die Aussparung eingefügt ist, liegt der Flansch an der Innenseite des Mantelkörpers an. Der Flansch kann dabei flächig oder punktförmig über mehrere Kontaktstellen am Mantelkörper anliegen. Er kann dazu die Form eines umlaufenden Rahmens aufweisen oder aus mehreren zungenförmigen Bereichen gebildet sein, die vom Griffteil nach außen ragen.

Um die Lage des Griffteils in horizontaler und vertikaler Richtung in der Aussparung zu fixieren, kann das Griffteil Bereiche aufweisen, die mit den Innenkanten der Aussparung im Wesentlichen spielfrei im Eingriff stehen. Grundsätzlich kann die Fixierung des Griffteils durch eine Anzahl von punktförmigen Kontaktstellen zwischen dem Griffteil und der Aussparung gewährleistet werden. Eine sichere und zugleich stabile Lagefixierung kann erreicht werden, wenn das Griffteil mit der gesamten Innenkontur der Aussparung flächig in Kontakt steht. Dazu weist das Griffteil erfindungsgemäß eine der Aussparung im Wesentlichen entsprechende Kontur auf, mit der das Griffteil zur Definition seiner Endlage in die Aussparung einsetzbar ist. Die Kontur kann dabei von einem das Griffteil rahmenartig umgebenden Schildteil gebildet werden, das bündig in die Aussparung einsetzbar ist.

Die Fixierung des Griffteils in radialer Richtung bezogen auf die Mantelkörperlängsachse erfolgt allein durch die Montage des Innenbehälters. Dieser kann ebenfalls aus Kunststoff hergestellt sein. Neben der leichten Ver- und Bearbeitbarkeit hat dies den Vorteil, dass das Behältnis ein insgesamt geringes Gewicht aufweist. Der Innenbehälter kann bei der Montage grundsätzlich von beiden offenen Seiten aus in den Mantelkörper hineingeschoben werden. Die Montagebewegung erfolgt also entlang der Mantelkörperlängsachse. Dadurch wird der Innenbehälter in radialer Richtung bezogen auf die Mantelkörperlängsachse fixiert. Erfindungsgemäß weist der Innenbehälter eine Anzahl von Anlagekanten auf. Im einfachsten Fall verlaufen sie parallel zur Montagerichtung und stehen zur Fixierung des Innenbehälters in Umfangsrichtung mit dem Flansch des Griffteils im Eingriff. Trichterförmig bzw. leicht winklig zueinander angeordnet, können sie die Montage des Innenbehälters erleichtern und ihm zusätzlich in eine der Längsrichtungen fixieren. Diese Art der Fixierung des Innenbehälters kann auch mit nur einer beispielsweise U-förmig gekrümmten Anlagekante erreicht werden.

Zur Fixierung in eine der Längsrichtungen entlang der Mantelkörperlängsachse kann der Innenbehälter wenigstens ein Rastelement oder eine mit ihm zusammenwirkende Anlagekante aufweisen. Ein entsprechendes Gegenrastelement kann sich am Mantelkörper oder am Griffteil befinden. Vorzugsweise wirkt der Innenbehälter mit dem Griffteil zusammen, indem er sich mit einer Anlagekante am Griffteil in Montagerichtung abstützt und ihn in der Gegenrichtung ein Rastelement am Griffteil festhält. Dadurch sind der Innenbehälter und der Griff nicht nur einfach und ohne zusätzliche Befestigungsmittel montierbar. Sondern durch ein Zusammenwirken kann auch auf Befestigungsmittel am Mantelkörper vollständig verzichtet werden, so dass er besonders kostengünstig hergestellt werden und ohne Berücksichtigung von Befestigungseinrichtungen frei gestaltet werden kann.

Ein mehrteiliger Haushaltsbehälters besteht aus zumindest einem Mantelkörper, einem topfförmigen Innenbehälter und einem Griff zur Montage. Zunächst wird das Griffteil in seine Endlage in die Aussparung des Mantelkörpers eingesetzt, so dass ein Flansch am Griffteil an der Innenseite des Mantelkörpers anliegt. Es ist unbedeutend, ob das Griffteil von außen oder von innen in die Aussparung des Mantelkörpers eingesetzt wird, solange es mit seinem Flansch auf der Innenseite des Mantelkörpers zur Anlage kommt.

Danach wird der Innenbehälter in den Mantelkörper entlang der Mantelkörperlängsachse eingeschoben, bis der Innenbehälter gegenüber dem Mantelkörper oder gegenüber dem Griff in deren gemeinsamer Endlage verrastet. Die Verrastung erfolgt dabei mittels am Innenbehälter angeordneter Rastelemente, die mit Gegenrastelementen am Mantelkörper oder am Griffteil zusammenwirken. Die Verrastung ist bevorzugt lösbar ausgebildet, so dass die Verbindung zwischen Innenbehälter und Mantelkörper bzw. zwischen Innenbehälter und Griffteil zur Demontage leicht wieder gelöst werden kann. Nach dem Lösen der Verrastung kann die Demontage des Behältnisses in umgekehrter Reihenfolge wie die Montage erfolgen.

Nachfolgend wird ein Ausführungsbeispiel anhand von Figuren beispielhaft näher erläutert. Es zeigen:

Figur 1 einen Mantelkörper mit einem Griffteil zu Montagebeginn des Behältnisses in perspektivischer Darstellung;

Figur 2 einen Mantelkörper mit Griffteil zu Beginn der Montage des Innenbehälters in perspektivischer Darstellung;

Figur 3 einen Längsschnitt durch das Behältnis mit Mantelkörper, Griffteil und Innenbehälter in deren Montageendlage.

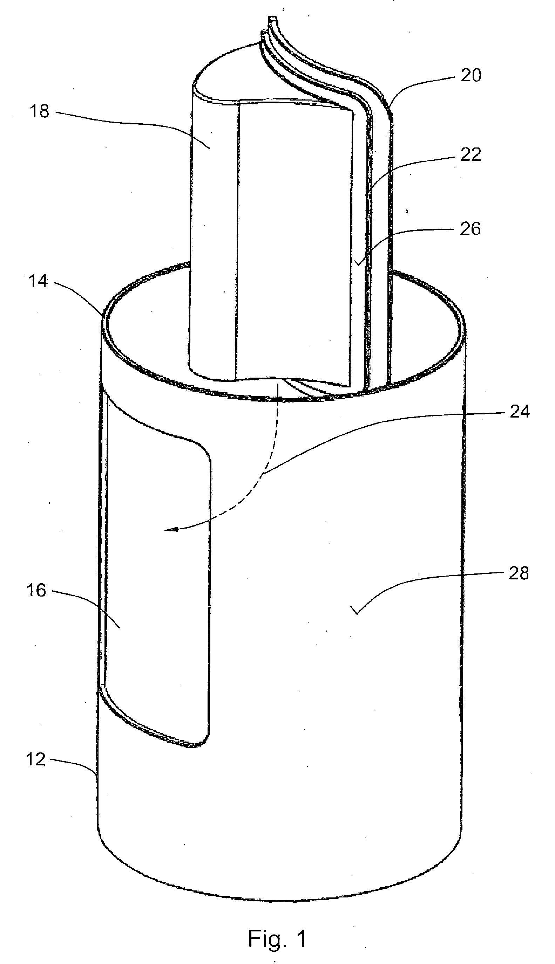

In Figur 1 sind ein hohlzylinderförmiger Mantelkörper 12 mit einer kreisringförmigen Deckfläche 14 und einer fensterförmigen Aussparung 16 sowie ein Griffteil 18 perspektivisch dargestellt. Das Griffteil 18 weist einen umlaufenden rahmenartigen Flansch 20 und einen zwischen dem Griffteil 18 und dem Flansch 20 angeordneten umlaufenden Schildteil 22 auf.

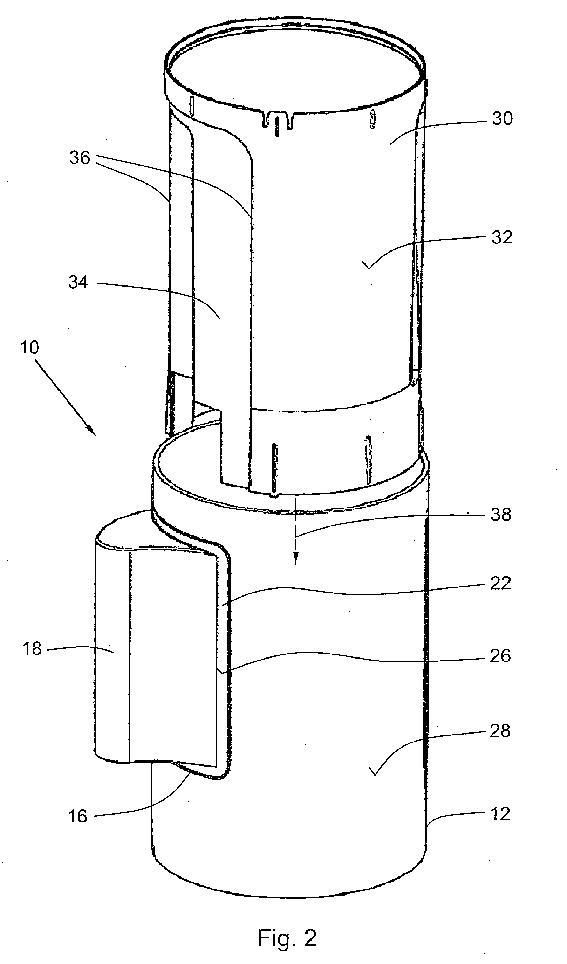

Das Griffteil 18 ist in einer zu Beginn seiner Montage möglichen Position gezeigt. Es wird bei der Montage von einer Innenseite des Mantelkörpers 12 aus in die Aussparung 16 eingefügt. Die dabei ausgeführte Montagebewegung ist mit dem Pfeil 24 bezeichnet. In der Endlage des Griffteils 18 liegt der Flansch 20 an der Innenseite des Mantelkörpers 12 an. Damit wird verhindert, dass das Griffteil 18 nach außen herausfallen kann. Die Außenkontur des Schildteils 22 entspricht der Innenkontur der Aussparung 16 und füllt diese vollständig aus. Da die Höhe des Schildteils 22 im Wesentlichen der Wandstärke des Mantelkörpers 12 entspricht, schließt die nach außen weisende Schildfläche 26 bündig mit der äußeren Mantelfläche 28 des Mantelkörpers 12 ab (vgl. Figur 2). Das Griffteil 18 ist dadurch sowohl in Umfangsrichtung als auch in Längsrichtung bezogen auf den Mantelkörper 12 fixiert.

Diesen Zustand zeigt Figur 2, in der ein Behältnis 10 mit dem Griffteil 18 in dessen Endlage im Mantelkörper 12 dargestellt ist. Das Schildteil 22 füllt dann die Aussparung 16 vollständig aus und die Schildfläche 26 schließt bündig mit der Mantelfläche 28 ab. Ein topfförmiger Innenbehälter 30 ist in einer zu Beginn seiner Montage möglichen Position gezeigt. Die Länge des Innenbehälters 30 entspricht dabei im Wesentlichen der Länge des Mantelkörpers 12. Die Mantelfläche 32 des Innenbehälters 30 weist einen Rücksprung 34 auf. Der Rücksprung 34 ist so geformt, dass der Innenbehälter 30, während er in Längsrichtung in den Mantelkörper 12 eingeschoben wird, am Flansch 20 vorbeigleiten kann. Die Einschubrichtung 38 ist in Figur 2 mit dem Bezugszeichen 38 bezeichnet. In der Endlage des Innenbehälters 30 umschließt dessen Rücksprung 34 den Flansch 20. Damit wird das Griffteil 18 vollständig, nun auch in radialer Richtung, fixiert. Der Rücksprung 34 weist parallel zur Einschubrichtung verlaufende Anlagekanten 36 auf. Diese stehen in der Endlage des Innenbehälters 30 mit dem Flansch 20 des Griffteils 18 im Eingriff und fixieren ihn in Umfangsrichtung.

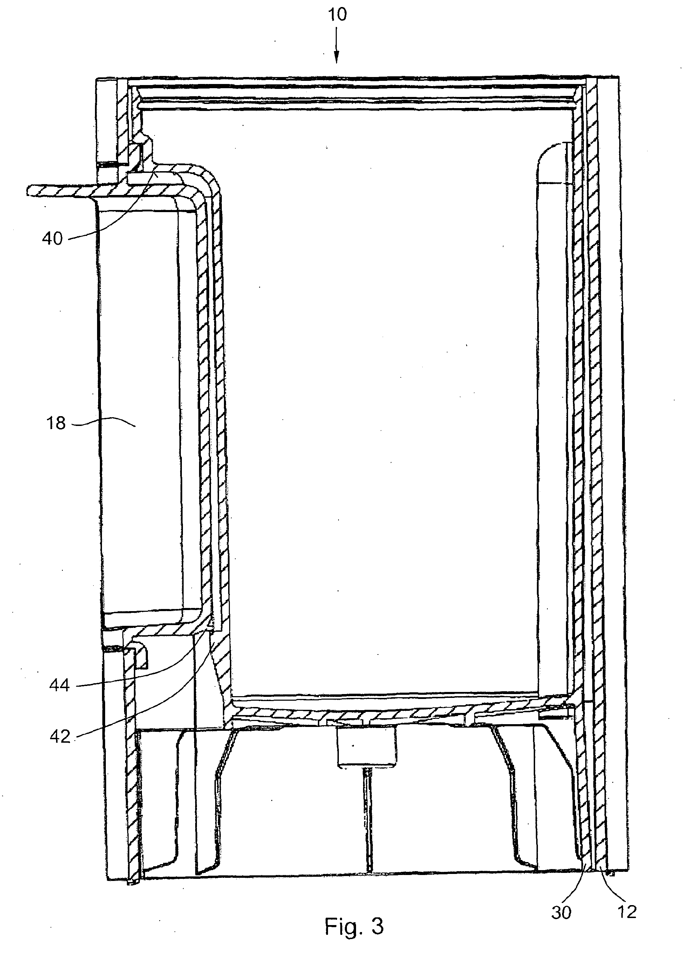

Das Behältnis 10, bei dem sich der Mantelkörper 12, das Griffteil 18 und der Innenbehälter 30 in ihrer gemeinsamen Endlage befinden, ist in Figur 3 gezeigt. Der Innenbehälter 30 ist dabei vollständig in den Mantelkörper 12 eingeschoben. Zur Lagefixierung in eine der Längsrichtungen weist der Innenbehälter 30 eine Anlagekante 40 auf. Diese liegt in dessen Endlage am Griffteil 18 an und verhindert ein weiteres Einschieben des Innenbehälters 30 in den Mantelkörper 12 über die Endlage hinaus. Zum anderen weist der Innenbehälter 30 ein widerhakenförmiges Rastelement 42 auf, dass in der Endlage des Innenbehälters 30 einen am Griffteil 18 angeordneten Vorsprung 44 hintergreift. Damit ist auch der Innenbehälter 30 in allen Richtungen fixiert.

Aus Gründen der Übersichtlichkeit ist zwischen dem Innenbehälter 30 und dem Griffteil 18 bzw. dem Mantelkörper 12 ein Spalt dargestellt. Im Gegensatz zu dieser Darstellung in der Figur 3 ist der Flansch 20 im Endzustand zwischen der Innenseite des Mantelkörpers 12 einerseits und der Mantelfläche 32 des Innenbehälter 30 andererseits eingeklemmt, so dass er in radialer Richtung nicht mehr bewegt werden kann. Der Rücksprung 34 umschließt also den über die Innenfläche des Mantelkörpers 12 nach innen überragenden Flansch 20 dreiseitig.

Es wird abschließend noch einmal darauf hingewiesen, dass es sich bei dem vorhergehenden, detailliert beschriebenen Behältnis 10 um ein Ausführungsbeispiel handelt, welches vom Fachmann in verschiedenster Weise modifiziert werden kann, ohne den Bereich der Erfindung zu verlassen. Insbesondere kann die konkrete Ausgestaltung des Mantelkörpers 12 und des Innenbehälters 30 andere Grundflächen als die hier beschriebene kreisförmige aufweisen. Ebenso kann das Griffteil 18 in einer anderen Form ausgestaltet werden, wenn dies aus Platzgründen bzw. designerischen Gründen notwendig ist.

Es wird der Vollständigkeit halber außerdem darauf hingewiesen, dass die Verwendung der unbestimmten Artikel" ein" bzw. " eine" nicht ausschließt, dass die betreffenden Merkmale auch mehrfach vorhanden sein können.

Bezugszeichenliste
- 10 -: Behältnis
- 12 -: Mantelkörper
- 14 -: Deckfläche
- 16 -: Aussparung
- 18 -: Griffteil
- 20 -: Flansch
- 22 -: Schildteil
- 24 -: Montagebewegung
- 26 -: Schildfläche
- 28 -: Mantelfläche
- 30 -: Innenbehälter
- 32 -: Mantelfläche
- 34 -: Rücksprung
- 36 -: Anlagekante
- 38 -: Einschubrichtung
- 40 -: Anlagekante
- 42 -: Rastelement
- 44 -: Vorsprung

## Patentansprüche

1. Behältnis (10) für Heißgetränkezubereitungsvorrichtungen, umfassend einen hohlzylinderförmigen Mantelkörper (12) mit einer Mantelfläche (28), in der eine fensterförmige Aussparung (16) angeordnet ist, einen topfförmigen Innenbehälter (30), dessen Außenkontur im Wesentlichen der Innenkontur des Mantelkörpers (12) entspricht und ein Griffteil (18) mit wenigstens einem Flansch (20) das in seiner Endlage unter Anlage seines Flanschs (20) an der Innenseite des Mantelkörpers (30) formschlüssig in dessen Aussprung (16) eingesetzt und durch den Innenbehälter (30) gesichert ist,
**dadurch gekennzeichnet, dass**
das Griffteil (18) eine der Aussparung (16) im Wesentlichen entsprechende Kontur aufweist, die von einem das Griffteil (18) rahmenartig umgebenden Schildteil (22) gebildet ist, das bündig in die Aussparung (16) einsetzbar ist.

2. Behältnis (10) nach Anspruch 1, **dadurch gekennzeichnet, dass** der Innenbehälter (30) eine Anzahl von Anlagekanten (36) aufweist, die zur Fixierung seiner Endlage zumindest in Umfangsrichtung mit dem Flansch (20) des Griffteils (18) im Eingriff stehen.

3. Behältnis (10) nach Anspruch 1 oder 2, **dadurch gekennzeichnet, dass** der Innenbehälter (30) zur Fixierung in Längsrichtung im Mantelkörper (12) wenigstens ein Rastelement (42) aufweist, das mit einem Gegenrastelement (44) am Mantelkörper (30) oder am Griffteil (18) zusammenwirkt.

## Claims

1. Container (10) for hot beverage preparation devices, comprising a hollow-cylindrical casing body (12) with a casing surface (28) in which a window-shaped cut-out (16) is arranged, a pot-shaped inner container (30), the outer contour of which substantially corresponds with the inner contour of the casing body (12), and a handle (18) with at least one flange (20) which in its end position is inserted, with contact of its flange (20) with the inner side of the casing body (30), in shape-coupling manner into the cut-out (16) thereof and is secured by the inner container (30), **characterised in that** the handle (18) has a contour which substantially corresponds with the cut-out (16) and which is formed by a panel part (22), which surrounds the handle (18) in frame-like manner and which is insertable flushly into the cut-out (16).

2. Container (10) according to claim 1, **characterised in that** the inner container (30) has a number of contact surfaces (36) which for fixing of its end position at least in circumferential direction are disposed in engagement with the flange (20) of the handle (18).

3. Container (10) according to claim 1 or 2, **characterised in that** the inner container (30) has, for fixing in longitudinal direction in the casing body (12), at least one detent element (42) which co-operates with a counter-detent element (44) at the casing body (30) or at the handle (18).

## Revendications

1. Récipient (10) pour dispositifs de préparation de boissons chaudes, comprenant un corps d'enveloppe (12) en forme de cylindre creux pourvu d'une surface d'enveloppe (28) dans laquelle est situé un évidement en forme de fenêtre (16), un récipient intérieur en forme de pot (30) dont le contour extérieur correspond essentiellement au contour intérieur du corps d'enveloppe (12) et un élément de poignée (18) pourvu d'au moins une bride (20) qui, dans sa position finale, est inséré par conjugaison de forme dans l'évidement (16) du corps d'enveloppe (30), sa bride (20) étant appuyée sur le côté intérieur du corps d'enveloppe (12), et est fixé dans cette position par le récipient intérieur (30),
**caractérisé en ce que**
l'élément de poignée (18) a un contour correspondant essentiellement à l'évidement (16) qui est formé par un élément en plaque (22) entourant l'élément de poignée (18) à la manière d'un cadre et qui peut être inséré dans l'évidement (16) de manière affleurée.

2. Récipient (10) selon la revendication 1, **caractérisé en ce que** le récipient intérieur (30) est pourvu d'un nombre de bords d'appui (36) qui sont en prise avec la bride (20) de l'élément de poignée (18) pour fixer sa position finale au moins dans la direction circonférentielle.

3. Récipient (10) selon la revendication 1 ou 2, **caractérisé en ce que** le récipient intérieur (30) est pourvu, pour la fixation dans la direction longitudinale dans le corps d'enveloppe (12), d'au moins un élément de cran (42) qui coopère avec un élément de cran antagoniste (44) sur le corps d'enveloppe (30) ou sur l'élément de poignée (18).
